# EUROPÄISCHE PATENTSCHRIFT

(11) **EP 1 275 193 B1**
(45) Veröffentlichungstag und Bekanntmachung des Hinweises auf die Patenterteilung: **14.04.2010**
(21) Anmeldenummer: 01909506.6
(22) Anmeldetag: 20.01.2001
(51) Int. Cl.: H02K 5/22, H02K 5/24

(54) **VORRICHTUNG ZUR VERBINDUNG SCHWINGUNGSBELASTETER, UNTERSCHIEDLICHE ELEKTRISCHE POTENZIALE AUFWEISENDER KOMPONENTEN**
DEVICE FOR CONNECTING COMPONENTS WITH VARIOUS ELECTRICAL POTENTIALS AND SUBJECT TO VIBRATION
DISPOSITIF POUR LE RACCORDEMENT DE DEUX COMPOSANTS SOUMIS A DES VIBRATIONS ET PRESENTANT DES POTENTIELS ELECTRIQUES DIFFERENTS

(30) Priorität: 22.03.2000 DE 10014227
(43) Veröffentlichungstag der Anmeldung: 15.01.2003
(73) Patentinhaber: ROBERT BOSCH GMBH, 70442 Stuttgart (DE)
(72) Erfinder: BAUER, Peter-Josef, B-3300 Tienen (BE); LOTT, Thomas, 77815 Buehl (DE); BECKER, Rainer, F-67930 Beinheim (FR); SPETH, Michael, 73566 Bartholomae (DE); MEYER, Christian, 76228 Karlsruhe-Wolfartsweier (DE)
(86) Internationale Anmeldenummer: PCT/DE2001/000246
(87) Internationale Veröffentlichungsnummer: WO 2001/071889

(56) Entgegenhaltungen:
- EP-A- 0 538 495
- EP-A- 0 971 474
- DE-A- 4 337 390
- DE-A- 19 832 015
- DE-A- 19 851 455
- GB-A- 2 284 246
- US-A- 5 063 317

## Beschreibung

### Stand der Technik

Die Erfindung geht aus von einer Vorrichtung zur Verbindung schwingungsbelasteter, unterschiedliche elektrische Potenziale aufweisender Komponenten, insbesondere zur Verbindung eines Polgehäuses eines Elektromotors mit einem Gehäuse einer Steuerelektronik innerhalb eines Kupplungsstellers eines Kraftfahrzeugs, gemäß dem Oberbegriff des Anspruchs 1. (Siehe US-A-5 063 317).

Aus der DE 197 01 739 A1 ist ein Kupplungssteller zum Ein- und Ausrücken einer Kraftfahrzeugkupplung bekannt, mit einem länglichen Elektromotor, welcher von einer Steuerelektronik angesteuert wird. Der Elektromotor und die Steuerelektronik sind Fahrzeugschwingungen ausgesetzt, wobei sich eine besondere große Schwingungsanregung ergibt, wenn der Kupplungssteller direkt am Getriebe befestigt ist. Eine mechanische Verbindung zwischen solchen Komponenten muß demzufolge dauerschwingfest ausgebildet sein. Darüber hinaus handelt es sich beim Elektromotor und der Steuerelektronik um stromdurchflossene, elektromagnetische Felder erzeugende Störquellen, welche sich gegenseitig und andere elektrische Komponenten des Kraftfahrzeugs beeinflussen. Beispielsweise hat das Polgehäuse des Elektromotors ein anderes elektrisches Potenzial als das Gehäuse, in welchem die Steuerelektronik untergebracht ist, so daß es aufgrund der Potenzialdifferenz zur Abstrahlung eines elektromagnetisches Feldes kommt. Aus diesen Gründen müssen solche Komponenten so ausgestattet sein, daß sie untereinander und gegenüber anderen Komponenten elektromagnetisch verträglich sind.

### Vorteile der Erfindung

Weil die Kraftübertragung zwischen den beiden Komponenten im wesentlichen nur durch den Kunststoffring stattfindet, hat die erfindungsgemäße Vorrichtung den Vorteil, daß durch Einpressen des Kunststoffrings zwischen den Befestigungsabschnitt und der Öffnung einerseits eine ausreichend statisch steife Verbindung und andererseits wegen der verbleibenden Restelastizität des Kunststoffmaterials ein Verformungsausgleich stattfinden kann, wodurch eine dauerschwingungsfeste Verbindung gewährleistet ist.
Darüber hinaus sind wegen der relativ hohen dynamischen Nachgiebigkeit von Kunststoff die beiden Komponenten voneinander weitgehend schwingungsentkoppelt, d.h. daß Körperschallübertragungen zwischen den Komponenten behindert werden. Im allgemeinen ist die Dämpfung einer aus Einzelkomponenten bestehenden Maschinenkonstruktion hauptsächlich durch die an den Verbindungsstellen der Einzelkomponenten auftretende Dämpfung bedingt. Kunststoffmaterial besitzt bekanntlich gute Dämpfungseigenschaften, weshalb mittels des Kunststoffrings durch fremderregte Schwingungen erzeugte Resonanznachgiebigkeiten reduziert werden können.

Die elektrischen Kontaktmittel überbrücken den Spalt zwischen der radial äußeren Umfangsfläche des Befestigungsabschnitts und der radial inneren Umfangsfläche der Öffnung, in welchen der Kunststoffring eingepreßt ist, und sorgen somit für einen Potenzialausgleich zwischen den Komponenten und demzufolge für eine elektromagnetische Verträglichkeit dieser untereinander sowie gegenüber anderen Komponenten.

Schließlich können durch die erfindungsgemäße Kombination des die mechanische Verbindung herstellenden, kraftübertragenden Kunststoffrings mit den elektrischen Kontaktmitteln in einem einzigen Montageschritt, nämlich dem Einstecken des Befestigungsabschnitts der einen Komponente in die Öffnung der anderen Komponente, gleichzeitig eine mechanische und elektrische Verbindung realisiert werden.

Durch die in den Unteransprüchen aufgeführten Maßnahmen sind vorteilhafte Weiterbildungen und Verbesserungen der im Patentanspruch 1 angegebenen Erfindung möglich.

Eine besonders zu bevorzugende Weiterbildung der Erfindung sieht vor, daß die erste Komponente eine aus elektrisch leitendem Material, beispielsweise aus Aluminiumdruckguß bestehende Befestigungsplatte sowie ein an deren einem Ende befestigtes, ebenfalls elektrisch leitendes Gehäuse einer Steuerelektronik eines Kupplungsstellers zum Ein- und Ausrücken einer Kraftfahrzeugkupplung beinhaltet und am anderen Ende der Befestigungsplatte die Öffnung in einer Manschette ausgebildet ist. Die zweite Komponente beinhaltet einen Elektromotor des Kupplungsstellers, der ein aus elektrisch leitendem Material bestehendes Polgehäuse aufweist. Zweckmäßig sind das die Steuerelektronik tragende Gehäuse und das Polgehäuse mit geringem Abstand und parallel zueinander an derselben Seite der Befestigungsplatte angeordnet. Durch die gleichsinnige Anordnung bilden der längliche Elektromotor und die Steuerelektronik eine besonders kompakte Einheit, die im Kupplungsstellergehäuse platzsparend untergebracht werden kann.

Gemäß einer Weiterbildung beinhalten die elektrischen Kontaktmittel einen an einer radial inneren Umfangsfläche der Öffnung der Befestigungsplatte ausgebildeten Kranz, mit unter Umfangsabstand sich über zumindest einen Teil des Umfangs der Öffnung angeordneten, sich nach radial innen erstreckenden Zungen, welche an ihren freien Enden mit je einer dünnen Quetschrippe versehen sind, die während des Einschiebens des Befestigungsabschnitts in die Öffnung an der äußeren Umfangsfläche des Befestigungsabschnitts zur Anlage bringbar und hierdurch in radialer Richtung um ein kleines Stuck zusammendrückbar ist. Wegen der hierdurch hervorgerufenen elastisch und/oder plastischen Verformung der Quetschrippen kommt ein zuverlässiger, elektrisch leitfähiger Kontakt zustande, so daß eine nieder-ohmige Verbindung entsteht.

### Zeichnungen

Ein Ausführungsbeispiel der Erfindung ist in den Zeichnungen dargestellt und in der nachfolgenden Beschreibung näher erläutert. Es zeigen :
Fig. 1 eine Seitenansicht eines Elektromotors und einer Steuerelektronik als Teile eines Kupplungstellers eines Kraftfahrzeugs, welche durch eine entlang der Linie I-I in Fig.2 im Schnitt dargestellten Befestigungsplatte miteinander verbunden sind;
Fig.2 eine Vorderansicht der Befestigungsplatte von Fig.1;
Fig.3 einen vergrößerten Ausschnitt Z von Fig.1;
Fig.4 einen vergrößerten Ausschnitt Y von Fig.2.

### Beschreibung des Ausführungsbeispiels

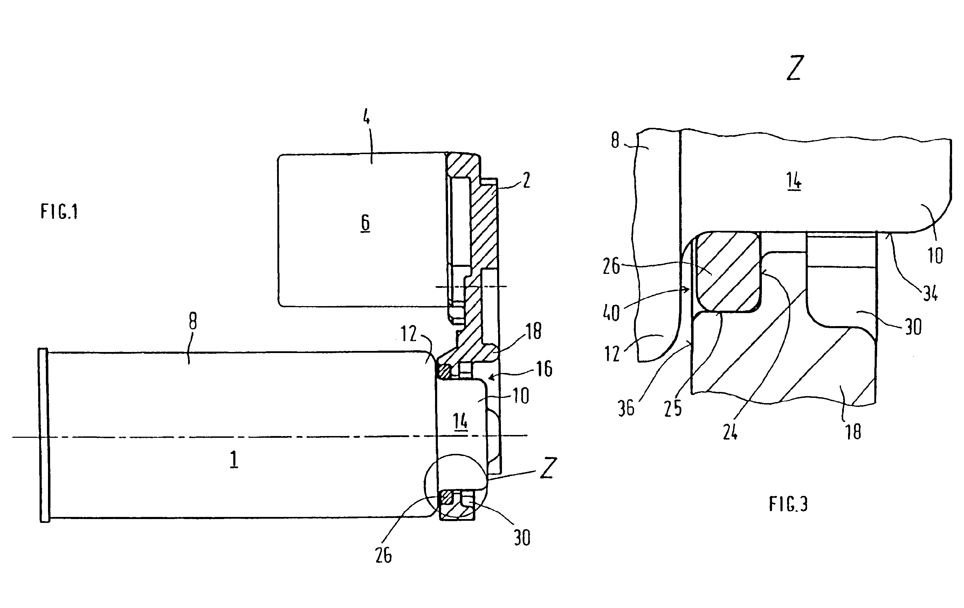

Von einem Kupplungssteller zum Ein- und Ausrücken einer Fahrzeugkupplung sind in Fig.1 aus Maßstabsgründen nur ein länglicher Elektromotor 1 sowie ein an diesem mittels einer flachen Befestigungsplatte 2 befestigtes Gehäuse 4 einer Steuerelektronik 6 dargestellt, die den Elektromotor 1 ansteuert. Die äußere Hülle des Elektromotors 1 besteht aus einem zylindrischen Polgehäuse 8 aus Metall, welches an seinem der Befestigungsplatte 2 gegenüberliegenden Ende 10 einen Absatz 12 aufweist, wodurch ein im Durchmesser reduzierter, zapfenförmiger Befestigungsabschnitt 14 gebildet wird, der beispielsweise zylindrisch ausgebildet ist.

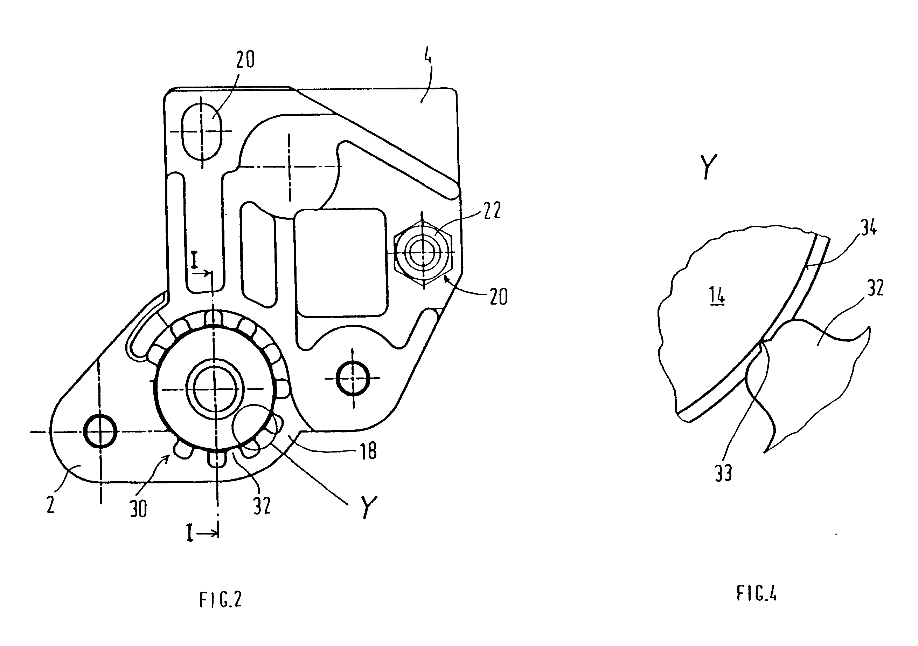

Der zapfenförmige Befestigungsabschnitt 14 des Polgehäuses 8 ragt in eine beispielsweise durchgehende Öffnung 16 einer am einen Ende der Befestigungsplatte 2 ausgebildeten Manschette 18. Die Befestigungsplatte 2 besteht aus elektrisch leitfähigem Material, beispielsweise aus Aluminiumdruckguß. Wie Fig.2 zeigt, ist die Befestigungsplatte 2 an ihrem anderen Ende mit Langlöchern 20 versehen, um in das Gehäuse 4 der Steuerelektronik 6 eingeschraubte Befestigungschrauben 22 hindurchführen zu können. Die Steuerelektronik 6 und der Elektromotor 1 sind daher in platzsparender Weise mit geringem Abstand und parallel zueinander an derselben Seite der Befestigungsplatte 2 angeordnet und ragen im wesentlichen senkrecht von ihr weg.

Wie anhand dem vergrößerten Ausschnitt Z gemäß Fig.3 zu sehen ist, weist die Manschette 18 an ihrer radial inneren Umfangsfläche 25 einen vom freien Ende 10 des Polgehäuses 8 weg weisenden Absatz 24 auf, in welchen ein Kunststoffring 26 eingepreßt ist, dessen Innendurchmesser etwas kleiner ist als der im Bereich des Absatzes 12 des Polgehäuses 8 vorhandene Außendurchmesser des Befestigungsabschnitts 14. Wie Fig.2 zeigt, ist an der radial inneren Umfangsfläche 25 der Manschette 18 zusätzlich ein Kranz 30 vorzugsweise einstükkig mit dieser ausgebildet, mit unter Umfangsabstand sich über einen Großteil des Umfangs der Manschette 18 angeordneten, sich nach radial innen erstreckenden Zungen 32, welche an ihren freien Enden mit je einer dünnen Quetschrippe 33 versehen sind, die am besten anhand des vergrößerten Ausschnitts Y gemäß Fig.4 zu sehen ist. Der Kunststoffring 26 und der Kranz 30 sind dann mit geringem Axialabstand hinter- oder nebeneinander in der Öffnung 16 der Manschette 18 angeordnet (Fig.3).

Zur Montage wird der zapfenförmige Befestigungsabschnitt 14 des Polgehäuses 8 in die Öffnung 16 der Manschette 18 gedrückt, wodurch der Kunststoffring 26 in radialer Richtung zusammengepreßt wird. Durch den Kunststoffring 26 ist dann das Polgehäuse 8 durch Kraftschluß an der Befestigungsplatte 2 schwingfest gehalten. Darüber hinaus kommen durch Einschieben des Befestigungsabschnitts 14 in die Öffnung 16 die Quetschrippen 33 des Kranzes 30 an einer äußeren Umfangsfläche 34 des Befestigungsabschnitts 14 in Linienberührung zur Anlage, wie am besten gemäß Fig. 4 zu sehen ist, und werden hierdurch in radialer Richtung um ein kleines Stück zusammengedrückt. Auf diese Weise wird bei der Montage neben der mechanischen Verbindung durch den Kunststoffring 26 gleichzeitig auch ein elektrisch leitfähiger Kontakt zwischen dem Polgehäuse 8 und der Befestigungsplatte 2 hergestellt. In funktionaler Hinsicht, d.h. im Hinblick auf die mechanische und elektrische Verbindung zwischen dem Polgehäuse 8 und der Befestigungsplatte 2 sind der Kunststoffring 26 und der Kranz 30 daher parallel geschaltet.

Vorzugsweise kontaktiert im montierten Zustand die zum Absatz 12 des Polgehäuses 8 weisende Stirnfläche 36 der Manschette 18 das Polgehäuse 8 nicht, so daß ein zwischen der radial inneren Umfangsfläche 25 der Öffnung 16 der Befestigungsplatte 2 und der radial äußeren Umfangsfläche 34 des Befestigungsabschnitts 14 des Polgehäuses 8 gebildeter Ringspalt 40 ausschließlich durch den Kranz 30 elektrisch leitend überbrückt wird, während der Kunststoffring 26 isolierend wirkt. Durch den Kranz 30 der Befestigungsplatte 2 ist somit eine elektrisch leitende Verbindung zwischen dem Polgehäuse 8 und dem Gehäuse 4 der Steuerelektronik 6 geschaffen, wodurch ein Potenzialausgleich zwischen dem beim Betrieb des Elektromotors 1 einen Potenziales des Polgehäuses 8 und dem demgegenüber anderen Potenzial des Gehäuses 4 der Steuerelektronik 6 stattfinden kann. Durch diese Maßnahme ist das Polgehäuse 8 mit dem Gehäuse 4 der Steuerelektronik 6 in elektromagnetisch verträglicher Weise verbunden.

Gemäß einer alternativen Ausführungsform kann der Befestigungsabschnitt 14 des Polgehäuses 8 anstatt zylindrisch zum freien Ende 10 des Polgehäuses 8 hin verjüngt ausgebildet sein. Darüber hinaus können der Befestigungsabschnitt 14 und die zugeordnete Öffnung 16 der Manschette 18 anstatt einen zylindrischen beispielsweise auch einen rechteckigen, vieleckigen, elliptischen oder jeden anderen Querschnitt aufweisen. Der Kunststoffring 26 und der Kranz 30 sind dann in ihrer Kontur an den jeweiligen Querschnittsverlauf angepaßt. Denkbar ist auch, daß mehrere solcher Kunststoffringe 26 oder Kränze 30 nebeneinander angeordnet sind.

Die Erfindung ist nicht auf eine Verbindung zwischen einem Elektromotor 1 und einer Steuerelektronik 6 eines Kupplungsstellers beschränkt, vielmehr können mit ihr auch andere, unterschiedliche elektrische Potenziale aufweisende Komponenten miteinander mechanisch und elektrisch verbunden werden.

## Patentansprüche

1. Vorrichtung zur Verbindung schwingungsbelasteter, unterschiedliche elektrische Potenziale aufweisender Komponenten, insbesondere zur Verbindung eines Polgehäuses (8) eines Elektromotors (1) mit einem Gehäuse (4) einer Steuerelektronik (6) innerhalb eines Kupplungsstellers eines Kraftfahrzeugs, beinhaltend elektrische Kontaktmittel (30) zur Schaffung einer elektrisch leitenden Verbindung zwischen den Komponenten und Mittel (26) zu deren mechanischer Verbindung, **dadurch gekennzeichnet, daß** die Mittel zur mechanischen Verbindung wenigstens einen in einer Öffnung (16) einer ersten Komponente (2, 4, 6) gehaltenen Kunststoffring (26) und einen in einer zweiten Komponente (1, 8) ausgebildeten zapfenförmigen Befestigungsabschnitt (14) aufweisen, wobei durch Einschieben des zapfenförmigen Befestigungsabschnitts (14) der zweiten Komponente (1, 8) in die Öffnung (16) der ersten Komponente (2, 4, 6) der Kunststoffring (26) einen Kraftschluß zwischen den beiden Komponenten erzeugend in radialer Richtung zusammenpreßbar ist und gleichzeitig die elektrischen Kontaktmittel (30) miteinander in Eingriff bringbar sind.

2. Vorrichtung nach Anspruch 1, **dadurch gekennzeichnet, daß** die erste Komponente eine aus elektrisch leitendem Material, beispielsweise aus Aluminiumdruckguß bestehende Befestigungsplatte (2) sowie ein an deren einem Ende befestigtes, ebenfalls elektrisch leitendes Gehäuse (4) der Steuerelektronik (6) beinhaltet und am anderen Ende der Befestigungsplatte (2) die Öffnung (16) in einer Manschette (18) ausgebildet ist.

3. Vorrichtung nach Anspruch 2, **dadurch gekennzeichnet, daß** an einer radial inneren Umfangsfläche (25) der Manschette (18) ein Absatz (24) ausgebildet ist, in den der Kunststoffring (26) eingreift.

4. Vorrichtung nach Anspruch 3, **dadurch gekennzeichnet, daß** die zweite Komponente der Elektromotor (1) des Kupplungsstellers ist, der ein aus elektrisch leitendem Material bestehendes Polgehäuse (8) aufweist.

5. Vorrichtung nach Anspruch 4, **dadurch gekennzeichnet, daß** das die Steuerelektronik (6) tragende Gehäuse (4) und das Polgehäuse (8) mit geringem Abstand und parallel zueinander an derselben Seite der Befestigungsplatte (2) angeordnet sind.

6. Vorrichtung nach Anspruch 5, **dadurch gekennzeichnet, daß** das Polgehäuse (8) an seinem der Befestigungsplatte (2) gegenüberliegenden Ende (10) einen Absatz (12) aufweist, wodurch ein im Durchmesser reduzierter, zapfenförmiger Befestigungsabschnitt (14) gebildet wird, welcher vorzugsweise zylindrisch ist.

7. Vorrichtung nach Anspruch 6, **dadurch gekennzeichnet**, der Kunststoffring (26) im montierten Zustand in einem Ringspalt (40) zwischen einer radial äußeren Umfangsfläche (34) des Befestigungsabschnitts (14) und der radial inneren Umfangsfläche (25) der Öffnung (16) eingepreßt ist.

8. Vorrichtung nach Anspruch 7, **dadurch gekennzeichnet, daß** die elektrischen Kontaktmittel einen an der radial inneren Umfangsfläche (25) der Öffnung (16) der Befestigungsplatte (2) ausgebildeten Kranz (30) beinhalten, mit unter Umfangsabstand sich über zumindest einen Teil des Umfangs der Öffnung (16) angeordneten, sich nach radial innen erstreckenden Zungen (32), welche an ihren freien Enden mit je einer dünnen Quetschrippe (33) versehen sind, die während des Einschiebens des Befestigungsabschnitts (14) in die Öffnung (16) an der äußeren Umfangsfläche (34) des Befestigungsabschnitts (14) zur Anlage bringbar und hierdurch in radialer Richtung um ein kleines Stück zusammendrückbar ist.

9. Vorrichtung nach Anspruch 8, **dadurch gekennzeichnet, daß** der Kunststoffring (26) und der Kranz (30) in der Öffnung (16) mit geringem Axialabstand hintereinander angeordnet sind.

10. Vorrichtung nach Anspruch 9, **dadurch gekennzeichnet, daß** der elektrische Kontakt zwischen dem Polgehäuse (8) und der Befestigungsplatte (2) ausschließlich durch den Kranz (30) hergestellt ist.

## Claims

1. Apparatus for connecting components which are subject to vibration and have different electrical potentials, in particular for connecting a pole housing (8) of an electric motor (1) to a housing (4) of a control electronics system (6) within a clutch actuator of a motor vehicle, containing electrical contact means (30) for establishing an electrically conductive connection between the components, and means (26) for mechanically connecting said components, **characterized in that** the means for mechanical connection have at least one plastic ring (26), which is held in an opening (16) in a first component (2, 4, 6), and a pin-like fastening section (14) which is formed in a second component (1, 8), it being possible for the plastic ring (26) to be compressed in the radial direction so as to generate a force-fit between the two components, and at the same time for the electrical contact means (30) to engage with one another, by inserting the pin-like fastening section (14) of the second component (1, 8) into the opening (16) in the first component (2, 4, 6).

2. Apparatus according to Claim 1, **characterized in that** the first component contains a fastening plate (2), which is composed of an electrically conductive material, for example of an aluminium die-casting, and a similarly electrically conductive housing (4) of the control electronics system (6) which is fastened to one end of said fastening plate, and the opening (16) is formed in a sleeve (18) at the other end of the fastening plate (2).

3. Apparatus according to Claim 2, **characterized in that** a shoulder (24) is formed on a radially inner peripheral face (25) of the sleeve (18), the plastic ring (26) engaging in said shoulder.

4. Apparatus according to Claim 3, **characterized in that** the second component is the electric motor (1) of the clutch actuator which has a pole housing (8) which is composed of an electrically conductive material.

5. Apparatus according to Claim 4, **characterized in that** the housing (4), which supports the control electronics system (6), and the pole housing (8) are arranged with small spacing from one another and parallel to one another on the same side of the fastening plate (2).

6. Apparatus according to Claim 5, **characterized in that** the pole housing (8) has a shoulder (12) at its end (10) which is opposite the fastening plate (2), a pin-like fastening section (14) of reduced diameter which is preferably cylindrical being formed as a result.

7. Apparatus according to Claim 6, **characterized in that** the plastic ring (26) is pressed into an annular gap (40) between a radially outer peripheral face (34) of the fastening section (14) and the radially inner peripheral face (25) of the opening (16) in the mounted state.

8. Apparatus according to Claim 7, **characterized in that** the electrical contact means contain a collar (30) which is formed on the radially inner peripheral face (25) of the opening (16) in the fastening plate (2) and has tongues (32) which are arranged at a peripheral distance over at least a portion of the periphery of the opening (16) and extend radially inward and are provided at their free ends with in each case a thin collapsible rib (33) which can be brought to rest against the outer peripheral face (34) of the fastening section (14) as the fastening section (14) is inserted into the opening (16) and as a result can be slightly compressed in the radial direction.

9. Apparatus according to Claim 8, **characterized in that** the plastic ring (26) and the collar (30) are arranged in the opening (16) one behind the other with a slight axial spacing.

10. Apparatus according to Claim 9, **characterized in that** the electrical contact between the pole housing (8) and the fastening plate (2) is established solely by the collar (30).

## Revendications

1. Dispositif pour le raccordement de composants soumis à des vibrations et présentant des potentiels électriques différents, notamment pour le raccordement d'un corps d'alternateur (8) d'un moteur électrique (1) à un boîtier (4) d'une électronique de commande (6) à l'intérieur d'un actionneur d'embrayage d'un véhicule automobile, contenant des moyens de contact électriques (30) pour établir une connexion électriquement conductrice entre les composants et des moyens (26) pour leur connexion mécanique,
**caractérisé en ce que** les moyens pour la connexion mécanique présentent au moins une bague en plastique (26) maintenue dans une ouverture (16) d'un premier composant (2, 4, 6) et une portion de fixation (14) en forme de tourillon réalisée dans un deuxième composant (1, 8), l'insertion de la portion de fixation (14) en forme de tourillon du deuxième composant (1, 8) dans l'ouverture (16) du premier composant (2, 4, 6) permettant de comprimer la bague en plastique (26) dans la direction radiale en générant un engagement par force entre les deux composants et permettant simultanément d'engager l'un avec l'autre les moyens de contact électriques (30).

2. Dispositif selon la revendication 1, **caractérisé en ce que** le premier composant contient une plaque de fixation (2) constituée d'un matériau électriquement conducteur, par exemple de fonte d'aluminium sous pression, ainsi qu'un boîtier (4) de l'électronique de commande (6), fixé à l'une de ses extrémités et également électriquement conducteur, et **en ce qu'**à l'autre extrémité de la plaque de fixation (2), l'ouverture (16) est réalisée dans un manchon (18).

3. Dispositif selon la revendication 2, **caractérisé en ce qu'**au niveau d'une surface périphérique radialement interne (25) du manchon (18) est réalisé un épaulement (24) dans lequel s'engage la bague en plastique (26).

4. Dispositif selon la revendication 3, **caractérisé en ce que** le deuxième composant est le moteur électrique (1) de l'actionneur d'embrayage, qui présente un corps d'alternateur (8) en matériau électriquement conducteur.

5. Dispositif selon la revendication 4, **caractérisé en ce que** le boîtier (4) portant l'électronique de commande (6) et le corps d'alternateur (8) sont disposés à faible distance l'un de l'autre et parallèlement l'un à l'autre du même côté de la plaque de fixation (2).

6. Dispositif selon la revendication 5, **caractérisé en ce que** le corps d'alternateur (8) présente à son extrémité (10) opposée à la plaque de fixation (2) un épaulement (12) de sorte qu'une portion de fixation de diamètre réduit, en forme de tourillon (14) soit formée, laquelle est de préférence cylindrique.

7. Dispositif selon la revendication 6, **caractérisé en ce que** la bague en plastique (26), dans l'état monté, est pressée dans une fente annulaire (40) entre une surface périphérique radialement externe (34) de la portion de fixation (14) et la surface périphérique radialement interne (25) de l'ouverture (16).

8. Dispositif selon la revendication 7, **caractérisé en ce que** les moyens de contact électriques contiennent une couronne (30) réalisée sur la surface périphérique radialement interne (25) de l'ouverture (16) de la plaque de fixation (2), avec des langues (32) disposées à distance circonférentielle sur au moins une partie de la périphérie de l'ouverture (16), s'étendant radialement vers l'intérieur, qui sont pourvues à leurs extrémités libres d'une mince nervure d'écrasement (33) respective, qui peut être amenée en appui pendant l'insertion de la portion de fixation (14) dans l'ouverture (16) contre la surface périphérique externe (34) de la portion de fixation (14) et de ce fait être quelque peu comprimée dans la direction radiale.

9. Dispositif selon la revendication 8, **caractérisé en ce que** la bague en plastique (26) et la couronne (30) sont disposées l'une derrière l'autre à faible distance axiale dans l'ouverture (16).

10. Dispositif selon la revendication 9, **caractérisé en ce que** le contact électrique entre le corps d'alternateur (8) et la plaque de fixation (2) est établi exclusivement par la couronne (30).
